# EUROPEAN PATENT SPECIFICATION

(11) **EP 4 055 450 B1**
(45) Date of publication and mention of the grant of the patent: **08.04.2026**
(21) Application number: 19836370.7
(22) Date of filing: 13.12.2019
(51) Int. Cl.: G05B 13/00, G06N 5/02, G06N 20/00

(54) **COGNITIVE ENGINEERING GRAPH**
COGNITIVE ENGINEERING GRAPH
GRAPHIQUE D'INGÉNIERIE COGNITIVE

(43) Date of publication of application: 14.09.2022
(73) Proprietor: Siemens Aktiengesellschaft, 80333 München (DE)
(72) Inventor: QUIROS ARAYA, Gustavo Arturo, Princeton, New Jersey 08540 (US); MUENZEL, Georg, 91344 Waischenfeld (DE); MARTINEZ CANEDO, Arquimedes, Plainsboro, New Jersey 08536 (US); HEINDL, Elisabeth, 90556 Cadolzburg (DE); NEIDIG, Jörg, 90409 Nürnberg (DE)
(74) Representative: HKW Intellectual Property PartG mbB
(86) International application number: PCT/US2019/066138
(87) International publication number: WO 2021/118580

(56) References cited:
- WO-A1-2018/140365
- CN-A- 110 489 623
- SZELKE E ET AL: "A cognitive engineering approach with AI techniques to reactive scheduling in the supervision of dynamic manufacturing processes", INTELLIGENT SYSTEMS ENGINEERING, 1994., SECOND INTERNATIONAL CONFERENC E ON HAMBURG-HARBURG, GERMANY, LONDON, UK,IEE, UK, 1 January 1994 (1994-01-01), pages 425 - 433, XP006512677, ISBN: 978-0-85296-621-1, DOI: 10.1049/CP:19940661

## Description

### TECHNICAL FIELD

This application relates to automation engineering. More particularly, the application relates to cognitive engineering for automation systems.

### BACKGROUND

Performing automation engineering tasks requires a high level of human technical and domain expertise due to the complexity and critically of modern automation systems in manufacturing and assembly, chemical, pharmaceutical, food and beverage, paper, electronics, etc.) The growing complexity of automated systems, the increasing requirements for high productivity and quality of the engineering tasks, and the increasing demands for safety and high availability of the automation make it very difficult for teams of human experts to write automation programs fast enough. Rotation of staff aggravates this problem for organizations. Improved systems and methods to address these challenges is desired. A computer system and a method for cognitive engineering technology for automation and control of systems are known from WO 2018 / 140365 A1.

### SUMMARY

The present invention is defined by the enclosed claims. According to some examples of this disclosure, a method for representing knowledge in a cognitive engineering system (CES) may include receiving information relating to an automation engineering project from an engineering tool, storing the received information in a cognitive engineering graph (CEG) comprising a plurality of nodes representative of an element of the automation engineering project and at least on edge connecting two of the nodes, the at least one edge representative of a relationship between the connected nodes, storing a plurality of previously generated CEGs representative of other prior automation engineering projects, and establishing a communication path between the CEG storing the received information and the plurality of previously generated CEGs. In some examples, the method may further include applying machine learning to the stored CEG based on the received information and the stored plurality of previously generated CEGs. The machine learning may be used to analyze the CEG based on the received information to identify at least one pattern that is representative of a given object of interest from the automation engineering project. In some examples, the CES may automatically add an element to the CEG based on the received information and on a query from a user. According to an example, the user may request that a change made by the CES be reversed. An undo action may be performed where the system identifies any recent automatic changes and any associated dependencies and removes those changes returning the system to the state it was in prior the automatic changes being performed.

The knowledge representation in the form of the CEG may include nodes that represent physical objects in the automation engineering project or an automation program for controlling a corresponding physical object in the automation engineering program. The CEG may include a representation of a human machine interface and/or a programmable logic controller. The CEG may be used to validate a design for the automation engineering project by comparing the CEG to a plurality of previously generated CEGs. I some embodiments the generated CEG can be compared to previously generated CEGs and provide a suggested course of action to a user.

According to some examples of the present disclosure, a system for providing a knowledge representation in a cognitive engineering system (CES) may include a computer-based engineering tool for providing at least one of designing, programming simulation and testing of an automation system, a cognitive system in communication with the computer-based engineering tool comprising: a knowledge extraction module for identifying and storing information contained in a project of the computer-based engineering tool and from data received from a physical automation system, a machine learning module for analyzing knowledge extracted by the knowledge extraction module and identifying characteristics of the automation system; an inductive programming module of automatically generating control programs for the automation system based on the stored information from the knowledge extraction module, and a knowledge representation comprising a cognitive engineering graph (CEG), the CEG comprising a plurality of nodes representative of an element of the automation engineering project and at least on edge connecting two of the nodes, the at least one edge representative of a relationship between the connected nodes.

The system may include a computer memory that stores a plurality of CEGs from previously designed projects in communication with the machine learning module for analyzing past knowledge. Based on analysis of the CEG of a current design in view of the previously designed projects, a feedback module may be provided to give information to the user. For example, a user may be provided with feedback relating to the validation of the project being designed. In other examples, the feedback module may provide a user with a recommended course of action based in part on the actions taken in previous projects.

A communications channel may be established between the knowledge extraction module and a physical automation system. The physical automation system generates data relating to the operating state of the automation system and provides the information in the data to the knowledge representation.

An automated reasoning module may be in communication with the engineering tool and the knowledge representation and may be configured to make certain design decisions
including the automatic addition of a component to an engineering project in the engineering tool.

### BRIEF DESCRIPTION OF THE DRAWINGS

The foregoing and other aspects of the present invention are best understood from the following detailed description when read in connection with the accompanying drawings. For the purpose of illustrating the invention, there is shown in the drawings embodiments that are presently preferred, it being understood, however, that the invention is not limited to the specific instrumentalities disclosed. Included in the drawings are the following Figures:
FIG. 1 is a block diagram of a cognitive automation engineering system according to aspects of embodiments of this description.
FIG. 2 is a representative example of a display screen that may be used as part of an automation engineering tool for designing a cognitive automation engineering system according to aspects of embodiments of this description.
FIG. 3 is a cognitive engineering graph for an automation system according to aspects of embodiments of this description.
FIG. 4 is a pattern extracted from a cognitive engineering graph for an automation system according to aspects of embodiments of this description.
FIG. 5 is the pattern of FIG. 4 with added nodes to represent a new element of an automation system according to aspects of embodiments of this description.
FIG. 6 is the simplified pattern of FIG. 5 for display to a user according to aspects of embodiments of this description.
FIG. 7 is the simplified view of FIG. 6 with new user-defined properties according to aspects of embodiments of this description.
FIG. 8 shows an updated pattern of FIG. 5 including new user-defined properties according to aspects of embodiments of this description.
FIG. 9 shows an updated cognitive engineering graph for a system including new user-defined properties according to aspects of embodiments of this description.
FIG. 10 is a block diagram of a computer system that may be used to implement a cognitive engineering system and cognitive engineering graph according to aspects of embodiments of the present disclosure.
FIG. 11 is a block diagram of a cognitive engineering graph that provides varying level of detail for objects represented by the cognitive engineering graph
FIG. 12 is a block diagram for a method of representing knowledge in a cognitive engineering system according to aspects of embodiments of the present disclosure.

### DETAILED DESCRIPTION

Embodiments described in this disclosure address bringing artificial intelligence (AI) to automation engineering tools to assist humans in design while increasing their productivity and ensuring high quality. The result is generating automation programs that provide higher reliability, availability and safety. Typically, if the complexity of an automation engineering task is significant, additional human engineers are added to the design team with the hope of providing solutions to the problem that are timely and contain high quality. Unfortunately, adding more humans to the teams does not scale in practice due to the increased overhead in communication and management.

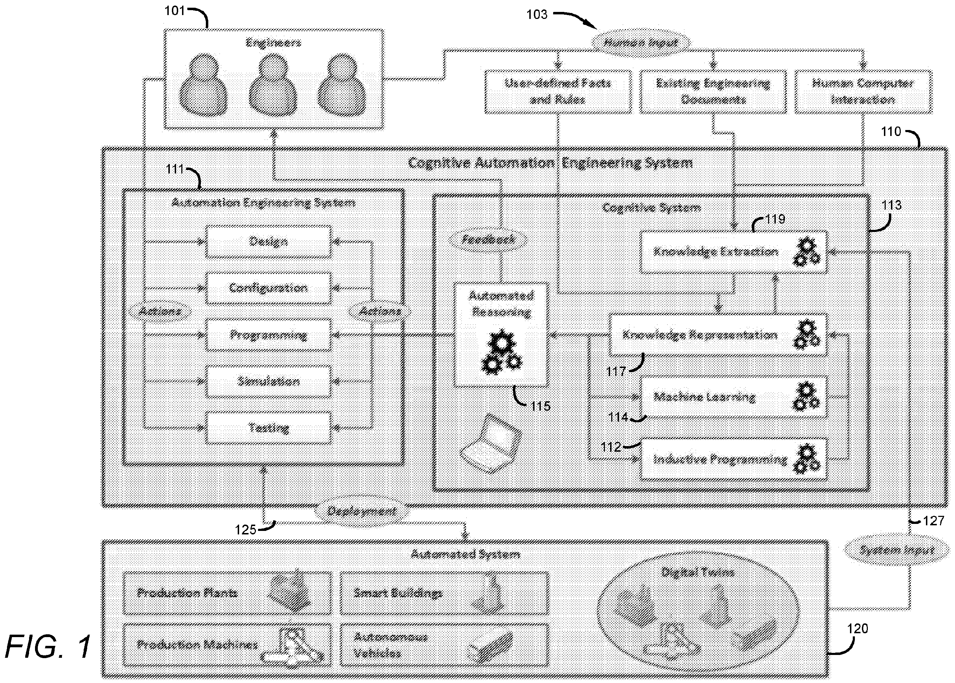

FIG. 1 is a high-level diagram of a Cognitive Automation Engineering System (CES) 110 configured to solve the problem that conventional automation engineering systems fail to leverage machine intelligence to improve decisions. In the CES 110, the engineer 101 provides human input 103 using an engineering tool 111, denoted as automation engineering system. The engineering tool 111 allows the engineer 101 to provide functionality including but not limited to design, configuration, programming, simulation and testing. When a design is complete, the engineering tool 111 allows the design to be deployed 125 in a physical automation system 120.

Cognitive engineering utilizes machine learning to allow the cognitive engineering system 110 to assist the engineer 101. Through machine learning, the CES 110 can recognize aspects of the physical automation system 120, along with past engineering actions previously taken and use this knowledge to assist the engineer 101 during design. For example, the CES 110 may observe an action the engineer 101 performs in the engineering tool 111 and associate the action with an action previously taken by the same or another engineer. Based on this recognition, the CES 110 may suggest to the engineer 101 that some or all of the project could be preloaded by the CES 110 into the workspace of the engineering tool 111. In some embodiments, the CES may make suggestions to the Engineer 101 regarding future design actions. For example, the CES 110 may observe the engineer 101 adding a system component to the engineering tool. The CES 110 may compare the action to actions taken by other engineers in the past who were working on the same problem or in a similar system. If the engineer's action is aligned with actions the CES 110 has seen as typical in the past, the CES 110 may suggest to the engineer 111 that a different course of action may be considered. The engineer has the option of accepting the CES suggestion or continuing with the original action of the engineer 101.

The cognitive system 113 leverages captured knowledge to assist the engineer 101. The cognitive system 113 functions to extract knowledge 119 from the system via system input 127 and provide a stored representation of the collected knowledge 117. Machine learning 114 is performed on the stored extracted knowledge to identify and exploit relationships in the data. In some embodiments the knowledge may be used to provide inductive programming 112 for components or control of the system. Automated reasoning 115 is applied to the knowledge representation 117 and may be used to analyze the knowledge representation 117 and provide feedback to the engineer 101 based on the analysis.

With reference to FIG. 1, embodiments of the present invention are directed to achieving a realization of the "Knowledge Representation" component 117 of the Cognitive Automation Engineering System 110. Through the reuse of engineering knowledge in the knowledge representation 117, a Cognitive Automation Engineering system 110 can improve the productivity and the quality of automation engineering projects.

The representation of knowledge has long been a topic of research with early attempts focusing on maintaining knowledge in a standard or specialized database, such as a relational database using database languages such as SQL. These databases store information in the form of rules and facts. In later research, the use of knowledge graphs has become popular for representing and analyzing linked information from communication networks, social network logistics, marketing systems and geographical information.

This disclosure presents a Cognitive Engineering Graph (CEG) as the main building block of a Cognitive Engineering System (CES), responsible for the knowledge representation 117 of the system. The CEG represents all relevant information about the engineering process in the form of a graph, in accordance with the techniques used by today's graph databases (e.g., Neo4j, BlazeGraph).

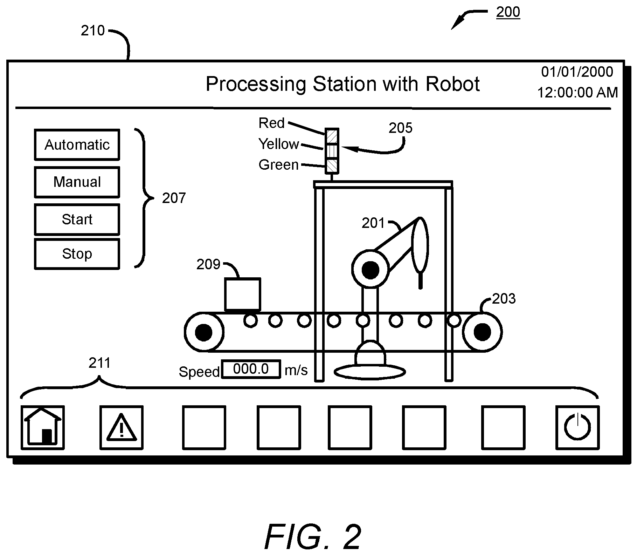

The CEG is created and subsequently updated with information obtained from engineering tools such as TIA Portal. Other related engineering tools such as computer assisted design (CAD)/ computer aided engineering (CAE)/ computer assisted manufacturing (CAM) may also provide information to the CEG. The information is analyzed and represented in the CEG in the form of nodes, edges and properties. The nodes represent the objects and data elements, while the edges connect two or more nodes and represent relationships between the connected nodes. Both nodes and edges may have properties that describe a particular instance in detail. The CEG may be displayed to the engineer at different levels of detail. The following examples will be explained with reference to an engineering design depicted in a view of an engineering tool as illustrated in FIG. 2.

FIG. 2 is an example of a screen display of an engineering tool according to aspects of embodiments of the present disclosure. The display 210 depicts the interface provided to an operator as a human-machine interface (HMI) used to control a manufacturing system. The engineering project developed in the engineering tool also provides control functionality for the automation system. The interface provides display elements that serve to operate control functions 207 to allow the operator to control the system. The display 210 may be a touch display allowing the operator to interact directly with the screen elements to perform functions such as starting and stopping the system or selecting automatic or manual operating modes. In other embodiments, interaction with the control elements may occur through input devices, such as a mouse, trackball, trackpad and the like.

Navigation buttons 211 provide additional functionality to assist in operation of the system. Objects that make up physical components of the automation system may be displayed in a workspace region of the display 210. Objects may include an industrial robot 201, a conveyor 203, a light tower 205 and an object of manufacture 209. Light tower 205 provides an indication of the current operating status of the system. For example, if the green portion of the light tower is illuminated, it may indicate that the system is currently actively operating. The light tower alerts a user or bystander to the fact that the robot 201 or the conveyor 203 may be in motion and present a danger to health and safety. Conveyor 203 is used to transport the object of manufacture 209 throughout the plant. For example, conveyor 203 may transport the object of manufacture 209 to a workstation "manned" by industrial robot 201. Industrial robot 201 may then perform manufacturing actions on the object of manufacture 209. When the actions of the industrial robot 201 are complete, conveyor 303 may transport the object of manufacture 209 to another workstation for further processing, or if manufacturing is complete, may transport the object of manufacture 209 for final inspection or shipping.

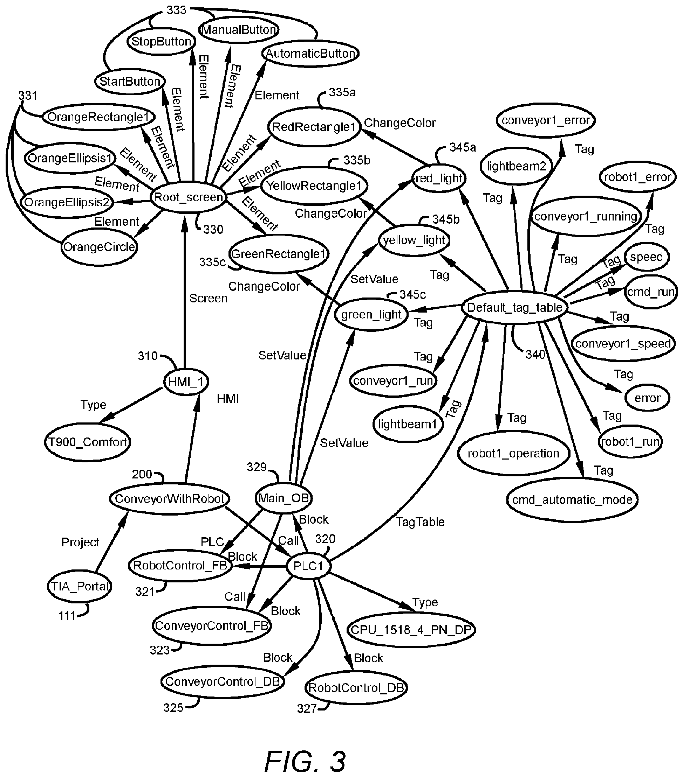

FIG. 3 is a diagram of a cognitive engineering graph that is representative of a graph that the cognitive engineering system may generate based on the design project depicted in FIG. 2. Arrows between the nodes define relationships between connected nodes. Information from the engineering tool, provided in this example as TIA portal 111, is used to generate the CEG 300. The engineering tool 111 includes a design project 200 such as the project illustrated in FIG. 2. The project 200 defines an automation application for a robot with a conveyor. The project 200 comprises components that define functionality for a human machine interface (HMI) 310, which provides interaction between the automation system with a human user or operator. The project 200 also provides functionality for a programmable logic controller (PLC) 320 for control of the automation system. The PLC 320 monitors operation of the automation system and provides control of the system through various signals and can generate alerts that guide operation of the components of the system.

The HMI 310 provides a root screen 330 that is displayed to the user. Objects displayed on the screen are elements of the root screen 330. For example, the robot 201 display shown in FIG. 2, is constructed from geometric shapes 331 including circles, ellipses, and rectangles. Buttons 333 for control of the system are also included in the root screen 330. The light tower 205 shown in FIG. 2 includes three colored rectangles: a red rectangle 335a, a yellow rectangle 335b and a green rectangle 335c.

PLC 320 provides blocks for monitoring data and providing control to the automation system. There is a first function block (FB) 321 containing the logic required to control the robot 201 and a second FB 325 for controlling the conveyor. Data blocks (DB) 325, 327 store data relating to the robot and the conveyor, respectively. The PLC 320 uses labels that identify the functions and properties of the components of the automation system. The labels or tags are stored in a tag table 340. The tags aid the PLC 320 in interacting with the display of the HMI 310 through an organization block (OB) 329. Via the OB 329, the values of the light tower lights can be controlled and displayed to the user. Using tags 345a for the red light, 345b for the yellow light and 345c for the green light, the OB 329 sets the value at each tag. For example, the value may be a binary value indicating whether the associated light is illuminated or dim. Using the tags 345a, 345b, 345c, the color of the associated rectangle 335a, 335b, 335c may be set to indicate each lights status. To display the light status to the user, for example, a darker shade may be used to indicate when the light is not illuminated, while a lighter, more vibrant shade of color may be used to indicate a light that is illuminated.

The structure of the CEG is constructed to include knowledge based on historical data from projects that have been previously designed and analyzed by the CEG. The past knowledge obtained by the CEG may be analyzed to discover useful patterns. For example, through logic-based pattern-matching or statistical machine learning, patterns may be identified that identify certain objects or processes that may be of use in the future. When a pattern is identified, either in a supervised or unsupervised manner, it can be applied to new contexts for various purposes including:
- validating existing designs by comparing the existing solution with the known pattern; and/or
- modifying or extending existing designs or creating new designs by applying the pattern for transforming the CEG.

An example will now be illustrated where the discovery and use of a light tower such as the light tower 205 in FIG. 2 is used to explain how the CEG may be employed for cognitive automation engineering. A light tower 205 is a high-level concept not represented explicitly in the engineering tool 111. Nevertheless, the engineer must understand this concept in order to perform corresponding automation engineering tasks. To this purpose, the CEG may be used to represent the high-level concept of the light tower and work with the concept directly. To achieve this, a first step involves the user querying the CES to determine if a light tower is included in the engineering project 200. The CES has analyzed multiple engineering projects from the past and stores this in a repository of past knowledge. Accordingly, the CES has learned patterns that identify a light tower. The CES may refer to the pattern attributable to a light tower in a query provided by a user that is structured in a language such as Cypher as follows:

```
  MATCH
     (n:TIA_Portal) - [rProject:Project]-> (project),
     (project)-[rPLC:PLC]->(plc),
     (plc)-[rBlock:Block]->(block),
     (plc)-[rTagTable:TagTable]->(tagtable),
     (tagtable)-[rTag:Tag]->(tag{dir:'Out'}),
     (project)-[rHMI:HMI]->(hmi),
     (hmi)-[rScreen:Screen]->(screen),
     (screen)-[rElement:Element]->(rectangle{type:'Rectangle'}),
     (tag)-[rChangeColor:ChangeColor]->(rectangle),
     (block)-[rSetValue:SetValue]->(tag)
   RETURN*
```

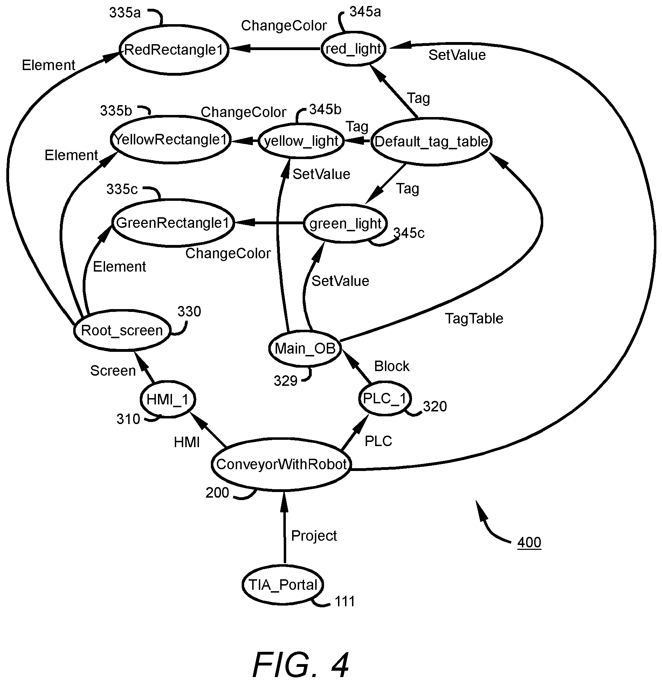

It should be noted that other formats or query languages may be used. The CES identifies the pattern associated with the user's request and searches for the light tower pattern in the current CEG to find a match. In this example, a match is found. The elements of this match are shown in FIG. 4.

FIG. 4 illustrates a pattern 400 contained in a CEG as identified in the query above. The pattern includes the project 200 and its implementation of an HMI 310 and PLC 320. In addition, the components that represent the light tower including the labels 345a, 345b, 345c from the organization block 329 and the rectangles 335a, 335b, 335c that are used in the display screen 330 of the HMI 310 are included in the pattern. Any project that contains these elements connecting in a similar manner would be indicative that the project contains a light tower.

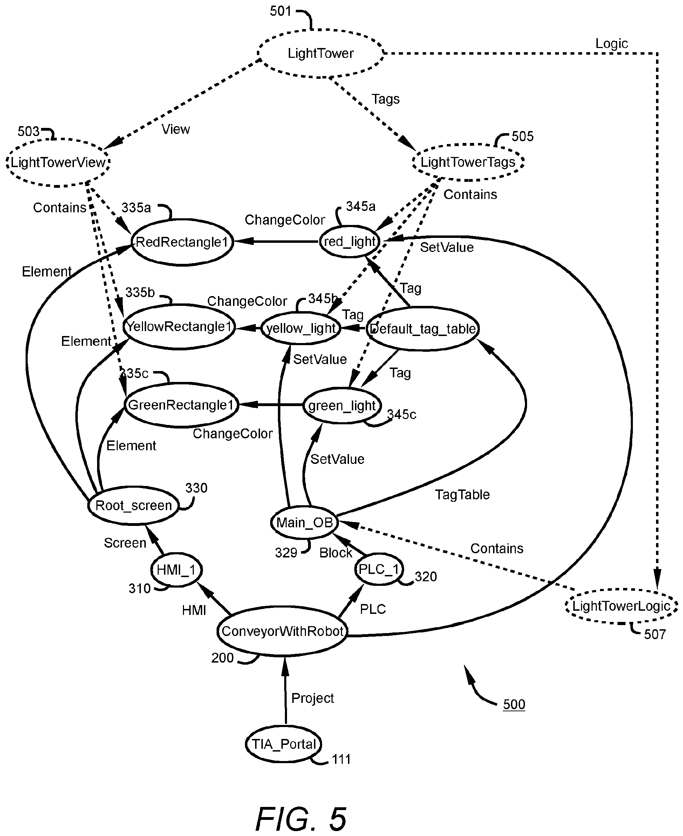

FIG. 5 is an illustration of a portion of a CEG that is representative of a light tower object. The CES creates new high-level nodes and edges (denoted by borders having broken lines) for representing the concept of the light tower. The new nodes include a LightTower object 501 that is associated with a LightTowerView 503, LightTowerTags 505, and LightTowerLogic 507. The LightTowerLogic 507 is contained in the OB 329. LightTowerView 503 contains red rectangle 335a, yellow rectangle 335b and green rectangle 335c. LightTowerTags 505 contains the labels for red_light 345a, yellow_light 345b and green_light 345c. These new structures 501, 503, 505 and 507 are created to represent the concept of the light tower in an explicit manner within the CEG. This allows both the user and the CES to conceive the same concepts and communicate effectively about them.

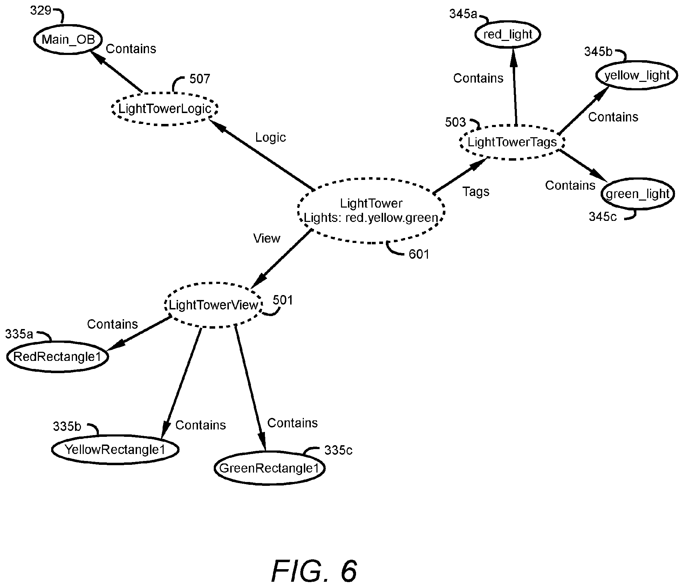

The CES analyzes the CEG and infers properties about the high-level concept of the light tower. These properties are presented to the engineer, and he/she can request the CES to modify them. The CES can determine the steps to carry out these modifications and can also warn the engineer about possible problems that can arise. For the light tower, the CES determines the number and colors of the lights in the light tower as a property: red, yellow and green. This property may be shown to the user in a simplified form as illustrated in FIG. 6.

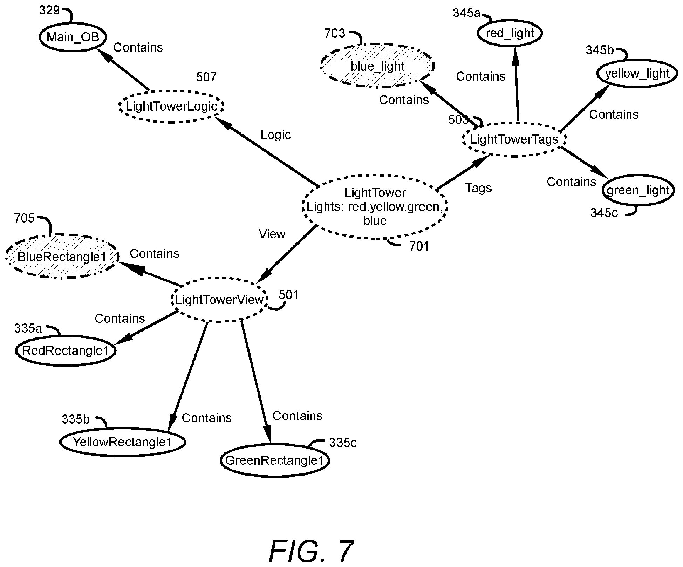

FIG 6. is a simplified high-level view 600 of the conceptual light tower from a CEG that can be displayed to a user. This view only shows the most basic relevant nodes and edges in the CEG that relate to the light tower while hiding all other information. This allows the user to concentrate on the current task of working with the light tower. According to embodiments of this disclosure, the user may work with the concept of the light tower by requesting the CES to add a new blue light to the light tower. This may be accomplished simply by adding a new item "blue" to the "Lights" property of the high-level light tower element as shown in 701 of FIG. 7.

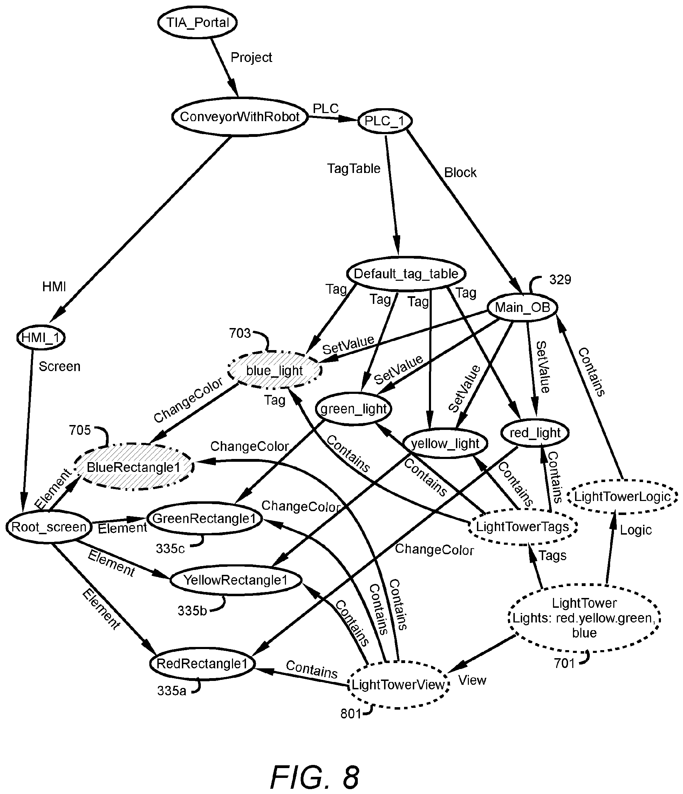

FIG. 7 is an illustration of an updated CEG generated automatically by the CES according to aspects of embodiments of the present disclosure. The user requests the addition of a blue light to the light tower. The CES having previously analyzed the CEG, includes functionality to implement the new property automatically. The CES proceeds to add a new output signal for the new blue light 703 adding a new graphical element 705 to the view of the light tower 501 and adding control logic to the Main_OB 329 program block for setting the value of the blue light signal. The names of the new elements are inferred by the CES based on the naming conventions of the existing elements: <COLOR>_light for the signal (e.g. blue_light 703), and <COLOR>_Rectangle<NUM> for the graphical element (e.g., BlueRectangle1 705). The CES displays the changes to be performed in the CEG: including the updated property 701, new nodes 703, 705, and new edges for the new relationships containing the new nodes 703, 705. The user may review the updated CEG and decide if the changes are to be applied. If so, the CES updates the CEG and executes all required engineering steps in the engineering system. The updated CEG is shown to the user (FIG. 8). For illustrative purposes, the newly created nodes are shown in FIG. 8 as hatched ovals.

The pattern for transforming the CEG to add the new light may alternatively be expressed as a query for the graph database. This time with instructions that match the context where the transformation will occur. The instructions that create new nodes and edges in the graph may be expressed as follows:

```
 MATCH
     (tia:TIA_Portal)-[rProject:Project]->(project),
     (project)-[rPLC:PLC]->(plc),
     (plc)-[rBlock:Block]->(block),
     (plc)-[rTagTable:TagTable]->(tagtable),
     (tagtable)-[rTag:Tag]->(tag{dir:'Out'}),
     (project)-[rHMI:HMI]->(hmi),
     (hmi)-[rScreen:Screen]->(screen),
     (pattern:LightTower)-[rLightTowerTags]->(tags:LightTowerTags),
     (pattern:LightTower)-[rLightTowerView]->(tags:LightTowerView),
     (pattern:LightTower)-[rLightTowerLogic]->(tags:LightTowerLogic),
     MERGE (newtag:blue_light{name:'blue_light', dir:'Out;, kind: 'created'})
     MERGE (newrectangle:BlueRectanglel {name:'BlueRectanglel', type:
     'Rectangle', kind: 'created'})
     MERGE (tagtable)-[rTag2:Tag]->(newTag)
     MERGE (screen)-[rElement:Element]->(newretangle)
     MERGE (newtag)-[rChangeColor:ChangeColor]->(newrectangle)
     MERGE (block)-[rSetValue:SetValue]->(newtag)
     MERGE (tags)-[rContainsl:Contains]->(newtag)
     MERGE *view)-[rContains2:Contains]->(newrectangle)
     RETURN *
```

FIG. 8 is an updated portion of a CEG after adding the new blue light to the light tower. The updated light tower elements in the CEG are shown to the user. In this manner, the multiple effects of adding a single light may be easily observed:
- the new output signal has been added to the default tag table 703;
- the new graphical element for the light (BlueRectangle1) 705 has been added to the root screen;
- the Main_OB program block 329 now has code for setting the value of the new output signal 703.
- The output signal is now set to change the color of the blue light in the HMI screen based on its signal value. (The colors in the HMI have been chosen to represent an on/off blue light, now shown in this view of the CEG);

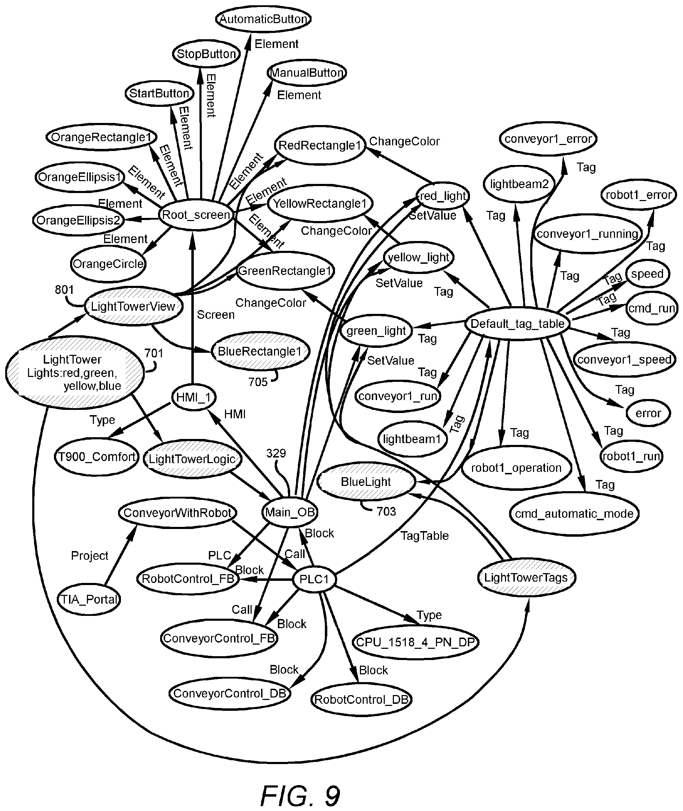

Referring now to FIG. 9, a diagram of an entire CEG after the addition of a new blue light to the light tower is shown according to aspects of embodiments of the present disclosure. After adding the high-level concept structures for the light tower and the new blue light, the entire CEG is shown to the user as illustrated in FIG. 9. Additional discovery of patterns and high-level modifications may be requested by the engineer. Also, all changes to the CEG are tracked by the CES, and the user can request to undo or modify previous decisions. For example, the user may undo automatic changes made by the CES. The changes to be undone may reside in multiple places throughout the CES. A history of the changes made can be stored, and the user can request that the changes be rolled back to a previous point in time. When changes The CES will then analyze the CEG, identify the necessary changes and apply them accordingly to the CEG and to the engineering tools.

In addition to the general information stored in the CEG regarding the various components of the system, the CES may require additional information in order to make reasoning decisions about the automation problems to be solved by the system being designed. In order to allow comprehensive reasoning regarding the problems faced, the system needs an understanding of the physical world and not just the general terms of the task to be solved. A typical automation program may include input modules for various sensors, output modules for various actuators and if used, one or more drive modules to control electric motors. However, this approach is missing a connection of these modules to the actual physical devices that are the subject of the automation program. Even if these connections were included in some textual form in the comments of the program, this would not provide a reliable source of information. According to some embodiments of the present disclosure, the CEG is developed to accommodate the representation of objects with varying levels of detail.

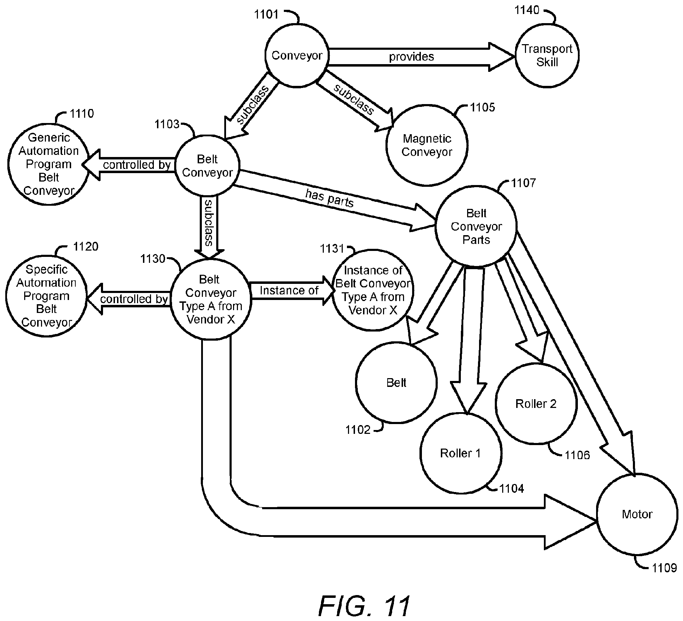

FIG. 11 is a block diagram of a CEG that provides varying level of detail for objects represented by the CEG. In a general sense, the CEG may contain nodes that are placeholders for physical objects. For example, a conveyor, an industrial robot or a product of manufacture may be represented by a node that does little more than identify the generic nature of the object. When the graph includes more information relating to these objects, the system can be trained to provide analysis and recommendations at the more precise level of detail. Considering the engineer and the CES have a true understanding of what a "conveyor" is, they can communicate more effectively about it. To this end, the CEG may be configured to store information including the physical properties of the conveyor (e.g., from a 3D model), the kinematics of the conveyor (e.g., joins, friction), the electrical connections and the connection to the industrial controller (e.g., PLC) along with knowledge of how a typical automation program is structured. Referring now to FIG. 11, a conveyor 1101 is represented as a generic concept, a conveyor in general terms is identified by a skill is provides, namely, transport 1140. As may be seen in FIG. 11, a conveyor 1101 may be further defined to include sub-classes of a conveyor including a belt conveyor 1103 and a magnetic conveyor 1105. The subclass may be defined to contain more specific information pertaining to a belt conveyor as opposed to a magnetic conveyor. For instance, a belt conveyor may be represented as containing parts 1107 that include a belt 1102, a first roller 1104, a second roller 1106 and a motor 1109. In addition, if the layer of detail defines the conveyor 1101 as a belt conveyor 1103, without further information, the CEG may be configured to deploy a generic automation program 1110 that is associated with a belt conveyor. However, the belt conveyor subclass 1103 may be represented in greater detail by defining a belt conveyor of a given type that is acquired from a given vendor 1130. In this case, the CEG may be configured to include a specific automation program 1120 for the specific conveyor of the given type and vendor 1130. Further still, the CEG can be configured to represent one or more instances of a belt conveyor of the given type from the given vendor 1131. By allowing for a varying degree of detail when representing objects within the CEG, the system is able to perform more in-depth analysis through machine learning techniques.

The varying detail level of the CEG can be achieved through the following elements:
- **Abstraction and Refinement** - Each class of object will be available on several layers of abstraction. Depending on the amount of available context information, a more generic/abstract or a more specific/concreate variant of the object will be used. This approach applies not only to physical objects, but for other concepts as well, such as skills. The term skill may be interpreted to mean just a service that some physical object can perform for the user. For example, a conveyor can transport things from point a to point b. Accordingly, a conveyor should have a transport skill. In contrast, a pick-and-place robot may also provide a transport skill but may simultaneously flip an object over by 180 degrees.
- **Classes and Instances** - If an object is used in a specific project, an instance of the class object will be created in the CEG. The instance may come from a class higher up in the derivation hierarchy and only over time when more information is available, will be the instance of a more and more specific class and eventually represent the concrete physical object in the shop floor.
- **Control and Simulation Behavior** - Objects in the CEGH have not only an ontological description, but at the same time an executable description of their behavior. In the case where the engineering system which hosts the CEG also has a simulation environment, this behavior could also be executed in simulation mode.

Some embodiments may be realized in the form of a graph database and accompanying software interfaces, which implement the knowledge representation functionality of the CEG while adhering to the principles above. While object-oriented databases and programming languages exist, they follow a basic design principle by which all objects are fully defined at their creation meaning that they lack the flexibility of being able to represent objects with increasing level of detail throughout the object's lifecycle.

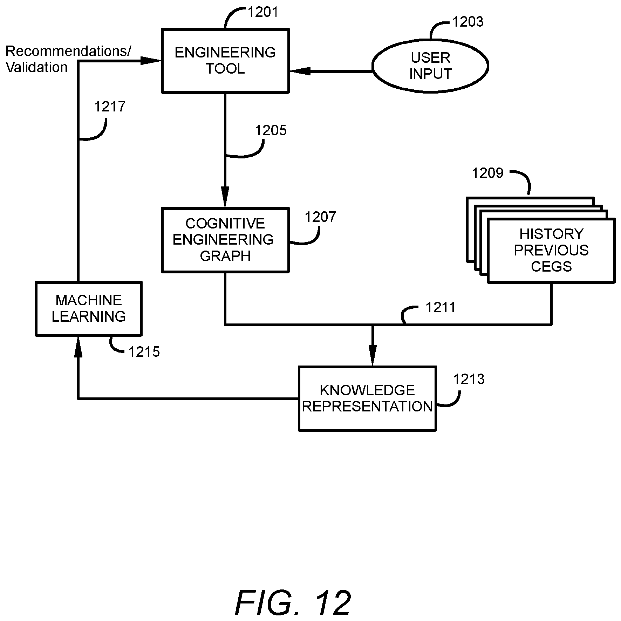

FIG. 12 is a block diagram for representing knowledge in a cognitive engineering system. Information 1205 is received from an engineering tool 1201. The engineering tool 1201 may receive input from a user 1203 and additionally generates information in an engineering design project based in part on the user input 1203. The information 1205 from the engineering tool 1201 may include information relating to physical objects of an automation system, control objects in an automation system, and control programs for operating control objects and other physical objects in the automation system. Any information relating to the automation system, including components contained in the system and information relating to the relationships between two or more components may be included the information 1205 received from the engineering tool 1201.

A historical record of previously designed projects may be stored in the form of a CEG. Multiple instances of previously generated CEGs 1209 may be stored. A communications link 1211 between the stored previously CEGs 1209 and the current CEG 1207 generated from on the information 1205. The information in the current CEG 1207 and the previously generated CEGs 1209 are included in the knowledge representation 1213 of the system. The knowledge representation contains stored knowledge gained from the experience of designers of varying experience and skill levels through the design on the current project and previously designed projects.

Machine learning 1215 may be applied to the knowledge representation to determine design choices and practices that have been determined to be successful, or conversely, design choices and practices that were determined to be unsuccessful. Machine learning 1215 may use the knowledge representation 1213 to make recommendations to a user via engineering tool 1201. Additionally, machine learning 1215 may examine an engineering project in the engineering tool 1201 and validate 1217 the design based on prior knowledge contained in the knowledge representation 1213.

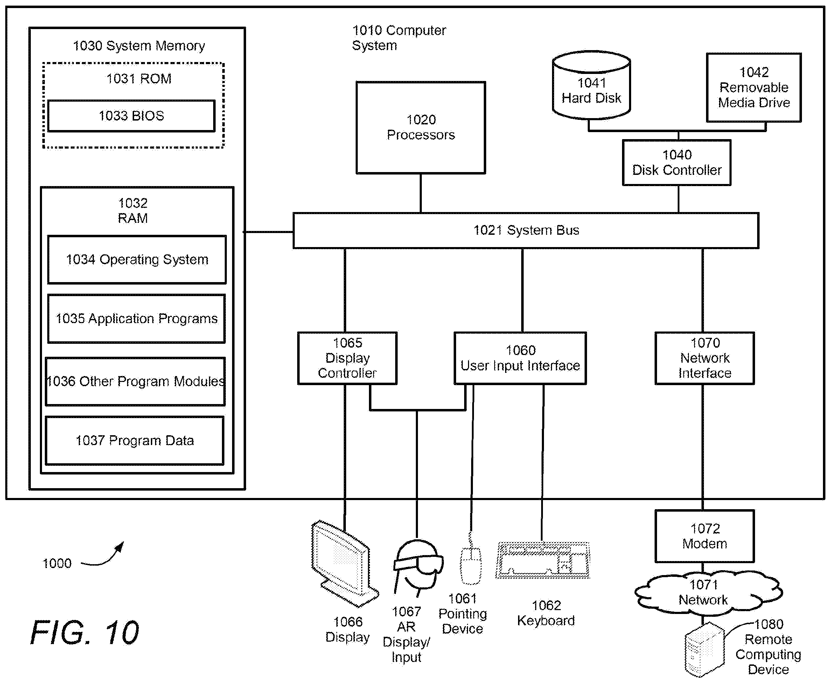

FIG. 10 illustrates an exemplary computing environment 1000 within which embodiments of the invention may be implemented. Computers and computing environments, such as computer system 1010 and computing environment 1000, are known to those of skill in the art and thus are described briefly here.

As shown in FIG. 10, the computer system 1010 may include a communication mechanism such as a system bus 1021 or other communication mechanism for communicating information within the computer system 1010. The computer system 1010 further includes one or more processors 1020 coupled with the system bus 1021 for processing the information.

The processors 1020 may include one or more central processing units (CPUs), graphical processing units (GPUs), or any other processor known in the art. More generally, a processor as used herein is a device for executing machine-readable instructions stored on a computer readable medium, for performing tasks and may comprise any one or combination of, hardware and firmware. A processor may also comprise memory storing machine-readable instructions executable for performing tasks. A processor acts upon information by manipulating, analyzing, modifying, converting or transmitting information for use by an executable procedure or an information device, and/or by routing the information to an output device. A processor may use or comprise the capabilities of a computer, controller or microprocessor, for example, and be conditioned using executable instructions to perform special purpose functions not performed by a general-purpose computer. A processor may be coupled (electrically and/or as comprising executable components) with any other processor enabling interaction and/or communication there-between. A user interface processor or generator is a known element comprising electronic circuitry or software or a combination of both for generating display images or portions thereof. A user interface comprises one or more display images enabling user interaction with a processor or other device.

Continuing with reference to FIG. 10, the computer system 1010 also includes a system memory 1030 coupled to the system bus 1021 for storing information and instructions to be executed by processors 1020. The system memory 1030 may include computer readable storage media in the form of volatile and/or nonvolatile memory, such as read only memory (ROM) 1031 and/or random-access memory (RAM) 1032. The RAM 1032 may include other dynamic storage device(s) (e.g., dynamic RAM, static RAM, and synchronous DRAM). The ROM 1031 may include other static storage device(s) (e.g., programmable ROM, erasable PROM, and electrically erasable PROM). In addition, the system memory 1030 may be used for storing temporary variables or other intermediate information during the execution of instructions by the processors 1020. A basic input/output system 1033 (BIOS) containing the basic routines that help to transfer information between elements within computer system 1010, such as during start-up, may be stored in the ROM 1031. RAM 1032 may contain data and/or program modules that are immediately accessible to and/or presently being operated on by the processors 1020. System memory 1030 may additionally include, for example, operating system 1034, application programs 1035, other program modules 1036 and program data 1037.

The computer system 1010 also includes a disk controller 1040 coupled to the system bus 1021 to control one or more storage devices for storing information and instructions, such as a magnetic hard disk 1041 and a removable media drive 1042 (e.g., floppy disk drive, compact disc drive, tape drive, and/or solid state drive). Storage devices may be added to the computer system 1010 using an appropriate device interface (e.g., a small computer system interface (SCSI), integrated device electronics (IDE), Universal Serial Bus (USB), or FireWire).

The computer system 1010 may also include a display controller 1065 coupled to the system bus 1021 to control a display or monitor 1066, such as a cathode ray tube (CRT) or liquid crystal display (LCD), for displaying information to a computer user. The computer system includes an input interface 1060 and one or more input devices, such as a keyboard 1062 and a pointing device 1061, for interacting with a computer user and providing information to the processors 1020. The pointing device 1061, for example, may be a mouse, a light pen, a trackball, or a pointing stick for communicating direction information and command selections to the processors 1020 and for controlling cursor movement on the display 1066. The display 1066 may provide a touch screen interface which allows input to supplement or replace the communication of direction information and command selections by the pointing device 1061. In some embodiments, an augmented reality device 1067 that is wearable by a user, may provide input/output functionality allowing a user to interact with both a physical and virtual world. The augmented reality device 1067 is in communication with the display controller 1065 and the user input interface 1060 allowing a user to interact with virtual items generated in the augmented reality device 1067 by the display controller 1065. The user may also provide gestures that are detected by the augmented reality device 1067 and transmitted to the user input interface 1060 as input signals.

The computer system 1010 may perform a portion or all of the processing steps of embodiments of the invention in response to the processors 1020 executing one or more sequences of one or more instructions contained in a memory, such as the system memory 1030. Such instructions may be read into the system memory 1030 from another computer readable medium, such as a magnetic hard disk 1041 or a removable media drive 1042. The magnetic hard disk 1041 may contain one or more datastores and data files used by embodiments of the present invention. Datastore contents and data files may be encrypted to improve security. The processors 1020 may also be employed in a multi-processing arrangement to execute the one or more sequences of instructions contained in system memory 1030. In alternative embodiments, hard-wired circuitry may be used in place of or in combination with software instructions. Thus, embodiments are not limited to any specific combination of hardware circuitry and software.

As stated above, the computer system 1010 may include at least one computer readable medium or memory for holding instructions programmed according to embodiments of the invention and for containing data structures, tables, records, or other data described herein. The term "computer readable medium" as used herein refers to any medium that participates in providing instructions to the processors 1020 for execution. A computer readable medium may take many forms including, but not limited to, non-transitory, non-volatile media, volatile media, and transmission media. Non-limiting examples of non-volatile media include optical disks, solid state drives, magnetic disks, and magneto-optical disks, such as magnetic hard disk 1041 or removable media drive 1042. Non-limiting examples of volatile media include dynamic memory, such as system memory 1030. Non-limiting examples of transmission media include coaxial cables, copper wire, and fiber optics, including the wires that make up the system bus 1021. Transmission media may also take the form of acoustic or light waves, such as those generated during radio wave and infrared data communications.

The computing environment 1000 may further include the computer system 1010 operating in a networked environment using logical connections to one or more remote computers, such as remote computing device 1080. Remote computing device 1080 may be a personal computer (laptop or desktop), a mobile device, a server, a router, a network PC, a peer device or other common network node, and typically includes many or all of the elements described above relative to computer system 1010. When used in a networking environment, computer system 1010 may include modem 1072 for establishing communications over a network 1071, such as the Internet. Modem 1072 may be connected to system bus 1021 via user network interface 1070, or via another appropriate mechanism.

Network 1071 may be any network or system generally known in the art, including the Internet, an intranet, a local area network (LAN), a wide area network (WAN), a metropolitan area network (MAN), a direct connection or series of connections, a cellular telephone network, or any other network or medium capable of facilitating communication between computer system 1010 and other computers (e.g., remote computing device 1080). The network 1071 may be wired, wireless or a combination thereof. Wired connections may be implemented using Ethernet, Universal Serial Bus (USB), RJ-6, or any other wired connection generally known in the art. Wireless connections may be implemented using Wi-Fi, WiMAX, and Bluetooth, infrared, cellular networks, satellite or any other wireless connection methodology generally known in the art. Additionally, several networks may work alone or in communication with each other to facilitate communication in the network 1071.

An executable application, as used herein, comprises code or machine-readable instructions for conditioning the processor to implement predetermined functions, such as those of an operating system, a context data acquisition system or other information processing system, for example, in response to user command or input. An executable procedure is a segment of code or machine-readable instruction, sub-routine, or other distinct section of code or portion of an executable application for performing one or more particular processes. These processes may include receiving input data and/or parameters, performing operations on received input data and/or performing functions in response to received input parameters, and providing resulting output data and/or parameters.

A graphical user interface (GUI), as used herein, comprises one or more display images, generated by a display processor and enabling user interaction with a processor or other device and associated data acquisition and processing functions. The GUI also includes an executable procedure or executable application. The executable procedure or executable application conditions the display processor to generate signals representing the GUI display images. These signals are supplied to a display device which displays the image for viewing by the user. The processor, under control of an executable procedure or executable application, manipulates the GUI display images in response to signals received from the input devices. In this way, the user may interact with the display image using the input devices, enabling user interaction with the processor or other device.

The functions and process steps herein may be performed automatically or wholly or partially in response to user command. An activity (including a step) performed automatically is performed in response to one or more executable instructions or device operation without user direct initiation of the activity.

The system and processes of the figures are not exclusive. Other systems, processes and menus may be derived in accordance with the principles of the invention to accomplish the same objectives. Although this invention has been described with reference to particular embodiments, it is to be understood that the embodiments and variations shown and described herein are for illustration purposes only. Modifications to the current design may be implemented by those skilled in the art, without departing from the scope of the invention. As described herein, the various systems, subsystems, agents, managers and processes can be implemented using hardware components, software components, and/or combinations thereof.

## Claims

1. A method for representing knowledge (1213) in a cognitive engineering system, CES (110), comprising:
receiving information (1205) relating to an automation engineering project (200) from an engineering tool (1201), wherein the received information includes information relating to physical objects of an automation system;
**characterized in that** the method further comprises:
storing the received information (1205) in a cognitive engineering graph, CEG (1207), comprising a plurality of nodes representative of the physical objects (201, 203, 205, 209) of the automation system in the automation engineering project (200) or an automation program for controlling a corresponding physical object (201, 203, 205, 209) in the automation engineering project (200), and at least one edge connecting two of the nodes, the at least one edge representative of a relationship between the connected nodes, wherein the CEG (1207) includes at least one node that represents a human machine interface, HMI (310), and/or at least one node that represents a programmable logic controller, PLC (320);
storing a plurality of previously generated CEGs (1209) representative of other prior automation engineering projects;
establishing a communication path (1211) between the CEG (1207) storing the received information and the plurality of previously generated CEGs (1209); and
applying machine learning (1215) to the stored CEG (1207) based on the received information and the stored plurality of previously generated CEGs (1209) for representing the knowledge (1213) assisting a user (1203) of the CES (110) during design of the automation system in the automation engineering project (200).

2. The method of claim 1, further comprising:
analyzing the CEG (1207) based on the received information (1205) to identify at least one pattern that is representative of a given object of interest from the automation engineering project (200).

3. The method of claim 1 or 2, further comprising:
analyzing the plurality of previously generated CEGs (1209) to discover at least one useful pattern that identify certain objects or processes for use in the future.

4. The method of any one of claims 1 to 3, wherein the project (200) comprises components that define functionality for the **HMI** (310), wherein the **HMI** (310) provides interaction between the automation system with a human user or operator.

5. The method of any one of claims 1 to 4, wherein the project (200) provides functionality for the PLC 320 for control of the automation system, wherein the PLC (320) monitors operation of the automation system and provides control of the system through various signals.

6. The method of any one of claims 1 to 5, further comprising:
automatically by the CES (110), adding an element to the CEG (1207) based on the received information and on a query from the user (1203).

7. The method of claim 6, further comprising:
performing an undo action by the CES (110) at a request of the user (1203) that removes the element that was automatically added to the CEG (1207).

8. The method of any one of claims 1 to 5, further comprising:
comparing the CEG (1207) based on the received information (1205) and the stored plurality of previously generated CEGs (1209); and
validating a design for the automation engineering project (200) based on the comparison.

9. The method of any one of claims 1 to 5, further comprising:
comparing the CEG (1207) based on the received information (1205) and the stored plurality of previously generated CEGs (1209); and
determining a proposed course of action for the user (1203) to perform in the automation engineering project (200) based on the comparison; and
communicating the propose course of action to the user (1203).

10. A system for providing a knowledge representation (117) in a cognitive engineering system, CES (110), comprising:
a computer-based engineering tool (111) for providing at least one of designing, programming simulation and testing of an automation system (120);
a cognitive system (113) in communication with the computer-based engineering tool (111) comprising:
a knowledge extraction module for identifying and storing information contained in an automation engineering project (200) of the computer-based engineering tool (111) and from data received from a physical automation system (120), wherein the information includes information relating to physical objects (201, 203, 205, 209) of the automation system (120);
a machine learning (114) module for analyzing knowledge (119) extracted by the knowledge extraction module and identifying characteristics of the automation system (120);
an inductive programming (112) module of automatically generating control programs for the automation system (120) based on the stored information from the knowledge extraction module;
a knowledge representation (117) comprising a cognitive engineering graph, CEG (1207), the CEG (1207) comprising a plurality of nodes representative of physical objects of the automation system (120) in the automation engineering project (200) or an automation program for controlling a corresponding physical object (201, 203, 205, 209) in the automation engineering project (200), and at least one edge connecting two of the nodes, the at least one edge representative of a relationship between the connected nodes, wherein the CEG (1207) includes at least one node that represents a human machine interface, HMI (310), and/or at least one node that represents a programmable logic controller, PLC (320);
a computer memory storing a plurality of CEGs (1209) from previously designed projects in communication with the machine learning (114) module for analyzing past knowledge; and
a feedback module for providing knowledge representation (117) from the cognitive system (113) to a user (101), the knowledge representation (117) assisting the user (101) of the CES (110) during design of the automation system (120) in the automation engineering project (200).

11. The system of claim 10, wherein the feedback module is configured to provide the user (101) with a design recommendation for the automation engineering project (200) based on an output from the machine learning (114) module.

## Patentansprüche

1. Verfahren zum Darstellen von Wissen (1213) in einem kognitiven Engineeringsystem, CES (110), umfassend:
Empfangen von Informationen (1205), die sich auf ein Automatisierungs-Engineering-Projekt (200) beziehen, von einem Engineering-Tool (1201), wobei die empfangenen Informationen Informationen beinhalten, die sich auf physische Objekte eines Automatisierungssystems beziehen;
**dadurch gekennzeichnet, dass** das Verfahren ferner umfasst:
Speichern der empfangenen Informationen (1205) in einem kognitiven Engineeringgrafen, CEG (1207), umfassend mehrere Knoten, die für die physischen Objekte (201, 203, 205, 209) des Automatisierungssystems in dem Automatisierungs-Engineering-Projekt (200) repräsentativ sind, oder ein Automatisierungsprogramm zum Steuern eines entsprechenden physischen Objekts (201, 203, 205, 209) in dem Automatisierungs-Engineering-Projekt (200), und mindestens eine Kante, die zwei der Knoten verbindet, wobei die mindestens eine Kante für eine Beziehung zwischen den verbundenen Knoten repräsentativ ist, wobei der CEG (1207) mindestens einen Knoten, der eine Mensch-Maschine-Schnittstelle, HMI (310), repräsentiert, und/oder mindestens einen Knoten, der eine programmierbare Logiksteuerung, PLC (320), repräsentiert, beinhaltet;
Speichern mehrerer zuvor erzeugter CEGs (1209), die für andere vorherige Automatisierungs-Engineering-Projekte repräsentativ sind;
Einrichten eines Kommunikationspfades (1211) zwischen dem CEG (1207), der die empfangenen Informationen speichert, und den mehreren zuvor erzeugten CEGs (1209); und
Anwenden von maschinellem Lernen (1215) auf den gespeicherten CEG (1207) basierend auf den empfangenen Informationen und den gespeicherten mehreren zuvor erzeugten CEGs (1209), zum Darstellen des Wissens (1213), das einen Benutzer (1203) des CES (110) während des Entwurfs des Automatisierungssystems in dem Automatisierungs-Engineering-Projekt (200) unterstützt.

2. Verfahren nach Anspruch 1, ferner umfassend:
Analysieren des CEG (1207), basierend auf den empfangenen Informationen (1205), um mindestens ein Muster zu identifizieren, das für ein gegebenes interessierendes Objekt aus dem Automatisierungs-Engineering-Projekt repräsentativ ist (200).

3. Verfahren nach Anspruch 1 oder 2, ferner umfassend:
Analysieren der mehreren zuvor erzeugten CEGs (1209), um mindestens ein nützliches Muster zu entdecken, das bestimmte Objekte oder Prozesse zur Verwendung in der Zukunft identifiziert.

4. Verfahren nach einem der Ansprüche 1 bis 3, wobei das Projekt (200) Komponenten umfasst, die die Funktionalität für die HMI (310) definieren, wobei die HMI (310) eine Interaktion zwischen dem Automatisierungssystem und einem menschlichen Benutzer oder Bediener bereitstellt.

5. Verfahren nach einem der Ansprüche 1 bis 4, wobei das Projekt (200) Funktionalität für die PLC 320 zur Steuerung des Automatisierungssystems bereitstellt, wobei die PLC (320) den Betrieb des Automatisierungssystems überwacht und die Steuerung des Systems durch verschiedene Signale bereitstellt.

6. Verfahren nach einem der Ansprüche 1 bis 5, ferner umfassend:
automatisches Hinzufügen eines Elements zu dem CEG (1207) durch das CES (110), basierend auf den empfangenen Informationen und auf einer Abfrage von dem Benutzer (1203).

7. Verfahren nach Anspruch 6, ferner umfassend:
Durchführen einer Rückgängigkeitshandlung durch das CES (110) auf eine Anforderung des Benutzers (1203), die das Element entfernt, das automatisch zum CEG (1207) hinzugefügt wurde.

8. Verfahren nach einem der Ansprüche 1 bis 5, ferner umfassend:
Vergleichen des CEG (1207) basierend auf den empfangenen Informationen (1205) und den gespeicherten mehreren zuvor erzeugten CEGs (1209); und
Validieren eines Entwurfs für das Automatisierungsprojekt (200) basierend auf dem Vergleich.

9. Verfahren nach einem der Ansprüche 1 bis 5, ferner umfassend:
Vergleichen des CEG (1207) basierend auf den empfangenen Informationen (1205) und den gespeicherten mehreren zuvor erzeugten CEGs (1209); und
Bestimmen einer vorgeschlagenen Vorgehensweise für den Benutzer (1203), die in dem Automatisierungs-Engineering-Projekt (200) durchzuführen ist, basierend auf dem Vergleich; und
Kommunizieren der vorgeschlagenen Vorgehensweise an den Benutzer (1203).

10. System zum Bereitstellen einer Wissensdarstellung (117) in einem kognitiven Engineeringsystem, CES (110), umfassend:
ein computerbasiertes Engineeringwerkzeug (111) zum Bereitstellen mindestens eines von Entwerfen, Programmierungssimulation und Testen eines Automatisierungssystems (120);
kognitives System (113) in Kommunikation mit dem computerbasierten Engineeringwerkzeug (111), umfassend:
ein Wissensextraktionsmodul zum Identifizieren und Speichern von Informationen, die in einem Automatisierungs-Engineering-Projekt (200) des computerbasierten Engineeringwerkzeugs (111) enthalten sind, und von Daten, die von einem physischen Automatisierungssystem (120) empfangen werden, wobei die Informationen Informationen beinhalten, die sich auf physische Objekte (201, 203, 205, 209) des Automatisierungssystems (120) beziehen;
ein Modul für maschinelles Lernen (114) zum Analysieren von Wissen (119), das durch das Wissensextraktionsmodul extrahiert wird, und Identifizieren von Charakteristika des Automatisierungssystems (120);
ein induktives Programmierungsmodul (112) zum automatischen Erzeugen von Steuerprogrammen für das Automatisierungssystem (120), basierend auf den gespeicherten Informationen aus dem Wissensextraktionsmodul;
eine Wissensdarstellung (117), umfassend einen kognitiven Engineering-Grafen, CEG (1207), wobei der CEG (1207) mehrere Knoten umfasst, die für physische Objekte des Automatisierungssystems (120) in dem Automatisierungs-Engineering-Projekt (200) repräsentativ sind, oder ein Automatisierungsprogramm zum Steuern eines entsprechenden physischen Objekts (201, 203, 205, 209) in dem Automatisierungs-Engineering-Projekt (200), und mindestens eine Kante, die zwei der Knoten verbindet, wobei die mindestens eine Kante für eine Beziehung zwischen den verbundenen Knoten repräsentativ ist, wobei der CEG (1207) mindestens einen Knoten, der für eine Mensch-Maschine-Schnittstelle, HMI (310), repräsentativ ist, und/oder mindestens einen Knoten, der für eine programmierbare Logiksteuerung, PLC (320), repräsentativ ist, beinhaltet;
einen Computerspeicher, der mehrere CEGs (1209) von zuvor entworfenen Projekten in Kommunikation mit dem Modul für maschinelles Lernen (114) zum Analysieren von vergangenem Wissen speichert; und
ein Feedback-Modul zum Bereitstellen einer Wissensdarstellung (117) von dem kognitiven System (113) an einen Benutzer (101), wobei die Wissensdarstellung (117) dem Benutzer (101) des CES (110) während des Entwurfs des Automatisierungssystems (120) in dem Automatisierungs-Engineering-Projekt (200) hilft.

11. System nach Anspruch 10, wobei das Feedback-Modul dazu ausgelegt ist, dem Benutzer (101) eine Entwurfsempfehlung für das Automatisierungs-Engineering-Projekt (200) basierend auf einer Ausgabe von dem Modul für maschinelles Lernen (114) bereitzustellen.

## Revendications

1. Procédé pour représenter une connaissance (1213) dans un système de génie cognitif, Cognitive Engineering System CES, (110), comprenant :
la réception d'informations (1205) concernant un projet d'ingénierie d'automatisation (200) en provenance d'un outil d'ingénierie (1201), dans lequel les informations reçues incluent des informations concernant des objets physiques d'un système d'automatisation ;
**caractérisé en ce que** le procédé comprend en outre :
le stockage des informations reçues (1205) dans un graphe de génie cognitif, Cognitive Engineering Graph CEG, (1207), comprenant une pluralité de nœuds représentatifs des objets physiques (201, 203, 205, 209) du système d'automatisation dans le projet d'ingénierie d'automatisation (200) ou un programme d'automatisation pour commander un objet physique correspondant (201, 203, 205, 209) dans le projet d'ingénierie d'automatisation (200), et au moins une frontière reliant deux des nœuds, l'au moins une frontière étant représentative d'une relation entre les nœuds reliés, dans lequel le CEG (1207) inclut au moins un nœud qui représente une interface homme-machine, Human Machine Interface HMI, (310), et/ou au moins un nœud qui représente un automate programmable, Programmable Logic Controller PLC, (320) ;
le stockage d'une pluralité de CEGs générés auparavant (1209) représentatifs d'autres projets d'ingénierie d'automatisation précédents ;
l'établissement d'un chemin de communication (1211) entre le CEG (1207) stockant les informations reçues et la pluralité de CEGs générés auparavant (1209) ; et
l'application d'un apprentissage machine (1215) au CEG stocké (1207) sur la base des informations reçues et de la pluralité stockée de CEGs générés auparavant (1209) pour représenter la connaissance (1213) aidant un utilisateur (1203) du CES (110) durant la conception du système d'automatisation dans le projet d'ingénierie d'automatisation (200).

2. Procédé de la revendication 1, comprenant en outre :
l'analyse du CEG (1207) sur la base des informations reçues (1205) pour identifier au moins un motif qui est représentatif d'un objet donné d'intérêt provenant du projet d'ingénierie d'automatisation (200).

3. Procédé de la revendication 1 ou 2, comprenant en outre :
l'analyse de la pluralité de CEGs générés auparavant (1209) pour découvrir au moins un motif utile qui identifie certains objets ou processus pour l'utilisation à l'avenir.

4. Procédé de l'une quelconque des revendications 1 à 3, dans lequel le projet (200) comprend des composants qui définissent une fonctionnalité pour l'HMI (310), dans lequel l'HMI (310) fournit une interaction entre le système d'automatisation avec un utilisateur ou opérateur humain.

5. Procédé de l'une quelconque des revendications 1 à 4, dans lequel le projet (200) fournit une fonctionnalité pour le PLC 320 pour la commande du système d'automatisation, dans lequel le PLC (320) surveille un fonctionnement du système d'automatisation et fournit une commande du système par le biais de divers signaux.

6. Procédé de l'une quelconque des revendications 1 à 5, comprenant en outre :
automatiquement par le CES (110), l'ajout d'un élément au CEG (1207) sur la base des informations reçues et d'une interrogation provenant de l'utilisateur (1203).

7. Procédé de la revendication 6, comprenant en outre :
la réalisation d'une action d'annulation par le CES (110) à la demande de l'utilisateur (1203), qui supprime l'élément qui a été ajouté automatiquement au CEG (1207).

8. Procédé de l'une quelconque des revendications 1 à 5, comprenant en outre :
la comparaison du CEG (1207) sur la base des informations reçues (1205) et de la pluralité stockée de CEGs générés auparavant (1209) ; et
la validation d'une conception pour le projet d'ingénierie d'automatisation (200) sur la base de la comparaison.

9. Procédé de l'une quelconque des revendications 1 à 5, comprenant en outre :
la comparaison du CEG (1207) sur la base des informations reçues (1205) et de la pluralité stockée de CEGs générés auparavant (1209) ; et
la détermination d'un plan proposé d'action pour l'utilisateur (1203) à réaliser dans le projet d'ingénierie d'automatisation (200) sur la base de la comparaison ; et
la communication du plan proposé d'action à l'utilisateur (1203).

10. Système pour fournir une représentation de connaissance (117) dans un système de génie cognitif, Cognitive Engineering System CES, (110), comprenant :
un outil d'ingénierie assistée par ordinateur (111) pour fournir au moins un élément parmi une conception, une programmation, une simulation, et des essais d'un système d'automatisation (120) ;
un système cognitif (113) en communication avec l'outil d'ingénierie assistée par ordinateur (111) comprenant :
un module d'extraction de connaissance pour identifier et stocker des informations contenues dans un projet d'ingénierie d'automatisation (200) de l'outil d'ingénierie assistée par ordinateur (111) et provenant de données reçues en provenance d'un système d'automatisation physique (120), dans lequel les informations incluent des informations concernant des objets physiques (201, 203, 205, 209) du système d'automatisation (120) ;
un module d'apprentissage machine (114) pour analyser une connaissance (119) extraite par la module d'extraction de connaissance et identifier des caractéristiques du système d'automatisation (120) ;
un module de programmation inductive (112) pour générer automatiquement des programmes de commande pour le système d'automatisation (120) sur la base des informations stockées provenant du module d'extraction de connaissance ;
une représentation de connaissance (117) comprenant un graphe de génie cognitif, Cognitive Engineering Graph CEG, (1207), le CEG (1207) comprenant une pluralité de nœuds représentatifs d'objets physiques du système d'automatisation (120) dans le projet d'ingénierie d'automatisation (200) ou un programme d'automatisation pour commander un objet physique correspondant (201, 203, 205, 209) dans le projet d'ingénierie d'automatisation (200), et au moins une frontière reliant deux des nœuds, l'au moins une frontière étant représentative d'une relation entre les nœuds reliés, dans lequel le CEG (1207) inclut au moins un nœud qui représente une interface homme-machine, Human Machine Interface HMI, (310), et/ou au moins un nœud qui représente un automate programmable, Programmable Logic Controller PLC, (320) ;
une mémoire d'ordinateur stockant une pluralité de CEGs (1209) provenant des projets conçus auparavant, en communication avec le module d'apprentissage machine (114) pour analyser une connaissance antécédente ; et
un module de rétroaction pour fournir une représentation de connaissance (117) depuis le système cognitif (113) à un utilisateur (101), la représentation de connaissance (117) aidant l'utilisateur (101) du CES (110) durant la conception du système d'automatisation (120) dans le projet d'ingénierie d'automatisation (200).

11. Système de la revendication 10, dans lequel le module de rétroaction est configuré pour fournir à l'utilisateur (101) une recommandation de conception pour le projet d'ingénierie d'automatisation (200) sur la base d'une sortie provenant du module d'apprentissage machine (114).
